# EUROPEAN PATENT SPECIFICATION

(11) **EP 1 204 217 B1**
(45) Date of publication and mention of the grant of the patent: **19.05.2010**
(21) Application number: 00123914.4
(22) Date of filing: 03.11.2000
(51) Int. Cl.: H04W 52/26, H04L 5/02, H04W 52/08, H04W 52/28

(54) **Transmission power control scheme for OFDM communication links**
Sendeleistungsregelung für OFDM-Kommunikationsverbindungen
Commande de la puissance de transmission pour des liaisons de communication OFDM

(43) Date of publication of application: 08.05.2002
(73) Proprietor: Sony Deutschland GmbH, 10785 Berlin (DE)
(72) Inventor: Wang, Zhaocheng, Hedelfinger Strasse 61 70327 Stuttgart (DE); Stirling-Gallacher, Richard, Hedelfinger Strasse 61, 70327 Stuttgart (DE)
(74) Representative: Körber, Martin Hans

(56) References cited:
- EP-A- 0 923 202
- EP-A- 0 938 208
- US-A- 5 586 141
- US-A- 5 832 387

## Description

The present invention relates to a control of the transmitting power of a cellular Orthogonal Frequency Division Multiplexing (OFDM) communication system, in particular to a wireless OFDM system, where two or more blocks in the time-frequency grid of the OFDM system are assigned to a communication link, and whereby each block can hop across the time-frequency grid of the OFDM system.

Recently, intense attention has focused on multiple access schemes which offer very high data rates over wireless channels for applications including wireless internet access, wireless multimedia and future generation mobile communication systems beyond UMTS. One of the main concerns of wireless cellular communication systems is inter-symbol interference, a major problem in high data rate transmission over multipath fading channels. There are many available multiple access schemes such as FDMA, TDMA, CDMA, OFDM and others. Multiple access schemes using OFDM offer promising solutions for the above challenges.

In a multiplex access scheme using OFDM, each communication link can be assigned one or more blocks across the time-frequency grid of OFDM based on its require data rate whereby each block joins a number of adjacent subcarriers and a number of adjacent time slots. Each block can hop across the time-frequency grid of the OFDM system following its own pseudo-randomly hopping pattern. The hopping pattern will either be repeated for every frame, superframe or any other predefined fixed time period.

The channel transfer function of the various channels may not only change from time to time but also from subcarrier to subcarrier. The variations in the received signal strength can be compensated by a power control adapted to track these variations and being able to keep the signal strength fixed at the receiver side.

According to conventional power control schemes, the quality of the received signals is measured on the receiver side, whereby the signal-to-noise-ratio, the carrier-to-interference-ratio, the bit-error-rate or any other quality measurement can be used for a quality judgement. The figure of the measured quantity is then compared to a set value or a set threshold, which may itself be adjusted dynamically based on the services just used. If the figure of the measured quantity is higher than the set value or threshold, then a "down" command will be sent to the transmitter to reduce the transmitted power, if the figure is smaller, an "up" command will be sent to increase the transmitted power, else the transmitter will be instructed to keep the current power level.

By the adoption of power control, the average transmitted power can be reduced under dynamic wireless multipath fading conditions. Due to the resulting reduction of the average transmitted power, the effect of other cells' interference or intercell interference can be reduced for cellular wireless systems thereby increasing the overall capacity of the system.

For wireless OFDM systems in which two or more blocks are allocated to a wireless communication link, and wherein the blocks are disjoint in frequency, a conventional power control system measuring the quality of the received signals from all the blocks uses only one qualifying figure representative for all the blocks. Consequently, only one common control is used for the compensation of variations in the signal transfer functions of all the blocks. In other words, the total transmitted power will be increased although this would only be necessary for one or a few of the blocks while for other blocks the transmission power could be reduced.

The conventional power control therefore brings some performance degradation when the channel transfer functions of different blocks change in a different manner. This is very likely when the frequency spacing between two different blocks in an OFDM wireless system is much larger than the coherent bandwidth, as it is desirable. When, e.g. the channel transfer function of one block becomes better and the transmitter side could reduce the transmission power it is likely, that at the same time, the channel transfer function of another block may become worse and the transmitter side has to increase its transmission power. A conventional power control system will then be unable to achieve an optimal solution for this situation. Consequently, the average transmitted power of a system using such a conventional power control scheme will be relatively high, thus could increase intercell-interference which results in a reduction of the overall system capacity.

Patent application EP 0 923 202 A2 discloses a power control information transmitting method and transmitting and receiving apparatus. When control symbol obtained by assigning control information for controlling transmission power to symbols of phase modulation is transmitted to a communication partner so as to control the transmission power of the communication partner, the control information which represents raising the transmission power of communication partner and the control information which represents falling the transmission power of communication partner can be assigned. Thereby, a plurality of band slots, that is multiband slot, can be used to communicate with a communication partner, and the control symbol representing the same control data as inserted in each band slot.

Patent application EP 0 938 208 A1 discloses a multicarrier transmission compatible with the existing GSM system. This relates to a transmission method and a transmission apparatus for transmitting signals on the basis of an OFDM/TDMA-system, wherein a plurality of subcarriers being orthogonal to each other are located to a variable number of channels.

It is therefore an object of the present invention to provide a power control scheme which optimises the transmitted power for wireless OFDM systems in which two or more blocks are allocated to a communication link and wherein the blocks are disjoint in frequency.

This object is achieved by a method for controlling the transmitting power of a wireless OFDM communication link, whereby two or more blocks in the time-frequency grid of the OFDM system are assigned to the communication link and whereby each block can hop across the time-frequency grid of the OFDM system, comprising the steps of measuring the quality of signals received from a transmitter by a receiver, classifying the signal's quality, sending power control information from the receiver to the transmitter based on the result of the classification of the signal quality, adjusting the transmitting power of the transmitter according to the power control information whereby the power control information sent to adjust the transmitting power of the transmitter contains separate information for each block assigned to the communication link, whereby
- the signals to be transmitted are distributed to separate processing branches by a multiplexing means, whereby each processing branch is assigned to one block of said communication link, and
- the OFDM hopping pattern is controlled by a separate processing branch provided by an OFDM hopping pattern control means for each block assigned to said communication link.

Further, the above object is achieved by a transmitting device for controlling the transmitting power of a wireless OFDM communication link of the above kind established with a receiver, comprising a multiplexing means for distributing the signals to be transmitted to separate processing branches, whereby each processing branch is assigned to one block of the communication link, an OFDM hopping pattern control means providing a separate processing branch for each block assigned to the communication link, a power gain control means adjusting the signal gain according to the power control information received from the receiver, and a transmitting means for transmitting the gain adjusted signals whereby the power gain control means provides a separate processing branch for each block assigned to the communication link.

The proposed scheme for controlling the transmitting power of a wireless OFDM communication link allows an effectively optimised transmitting power control adjustment by taking into account the different channel transfer functions for each of the blocks separately. Consequently, the overall transmitting power level should be reduced as compared with the conventional power control scheme thereby reducing the intercell-interference and as a further consequence increasing the overall system capacity.

Further advantageous features are claimed in the respective subclaims.

Advantageously, the signal processing branch of the transmitting device for controlling the transmitting power of a wireless OFDM communication link comprises an OFDM hopping pattern control means for the block assigned to a processing branch and a power gain control means for adjusting the signal gain according to the power control information received for the block assigned to this processing branch from the receiver. Thus, the power can be controlled separately for each block.

The quality of the received signal is advantageously determined based on a measurement of the signal-to-noise-ratio of a signal received from the transmitting device. Alternatively, a figure for the signal quality is derived from a measurement of the carrier-to-interference-ratio or the bit-error-rate of a signal received from the transmitting device. Further advantageously, a determination of the signal quality may be based on a combination of at least two of the above mentioned qualifying quantities, allowing a judgement of the signal quality related to practically relevant signal distortions.

It is advantageous, that the blocks hop across the time-frequency grid according to a pseudo-randomly scheme, whereby further advantageously, the hopping pattern is repeated with a period of one frame or a period of one superframe or with a predefined fixed time period, for achieving an easily manageable allocation system.

The proposed power control scheme is further advantageously used for up-link connections from a mobile communication device to a base station and for down-link connections from a base station to a mobile communication device to ensure a good two-way communication.

The power control scheme according to the present invention can e.g. be implemented in a mobile terminal and/or in a base station for an OFDM communication system e.g. an OFDM communication system according to the UMTS standard.

In the following description the present invention is explained in more detail in relation to the enclosed drawings, in which
Fig. 1 shows a time-frequency grid representation of the resource assignment for one communication link being assigned two blocks in an OFDM wireless system
Fig. 2 shows a block diagram of a prior art power control transmitter scheme
Fig. 3 shows a receiver structure for the evaluation of the signal quality according to the present invention
Fig. 4 shows a transmitter structure for a power control according to the present invention.

In an OFDM system, the information to be transmitted is modulated onto a number of subcarriers orthogonal to each other in a frequency domain. A plurality of subcarriers can be allocated to a variable number of channels, each channel containing a variable number of subcarriers, depending on the signal transmission rate requested.

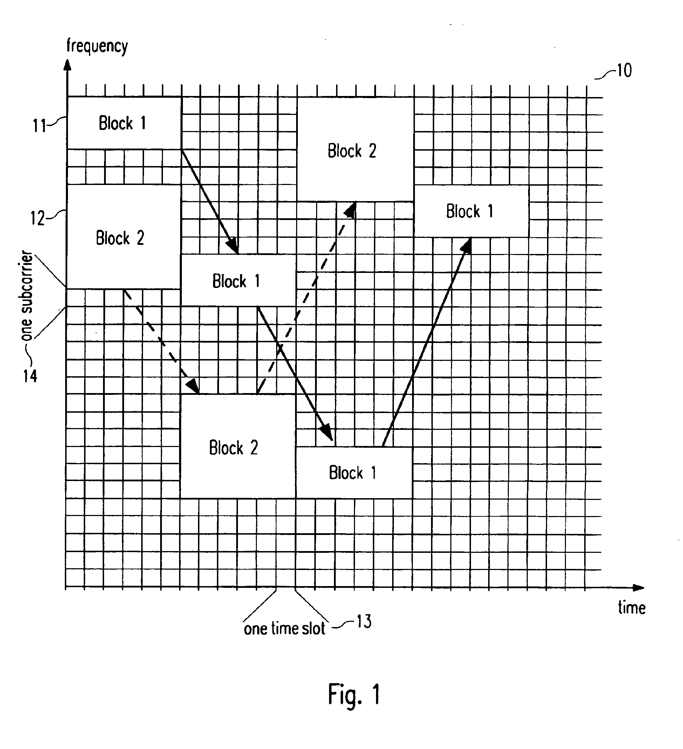

A resource assignment 10 for one communication link of a user in an OFDM wireless system is shown in Fig. 1. In this example, both a block 11 and a block 12 of different size are assigned to one communication link. The first block is named Block 1 and the second Block 2. Generally, the number and size of the blocks assigned to one link depends on the required data rate and the subcarriers available. The size of each block is defined by its number of adjacent subcarriers 14 and number of joint time slots 13. A different number of joint subcarriers can be allocated to different blocks so that the blocks vary in size or, more exactly, the bandwidth used varies from block to block.

To realise frequency diversity and interference diversity, the frequency band can be changed for a block. Usually the bandwidth is kept constant for each block so that the size of the blocks does not vary while changing the frequency band. The continuous changing of the frequency band for each block is called hopping. Each block can pseudo-randomly hop across the time-frequency grid of the OFDM system, whereby the hopping schemes of the individual blocks of one communication link are not correlated with each other as shown in Fig. 1. The hopping pattern of the blocks can be repeated with any predefined fixed time period like e. g. a frame or a superframe.

It is desirable, that the frequency spacing between two different blocks in an OFDM wireless system is much larger than the coherent bandwidth to obtain frequency diversity. Due to this, multipath propagation will have a different effect on the channel transfer function of each block. Furthermore, the channel transfer function of a block will vary with the block hopping from one frequency band to the next. By employing a pseudo-random block hopping scheme, the variations of the channel transfer function for each block are not correlated with the variations in the channel transfer function of a different block. Therefore, a regulation of the power gain according to the channel transfer function of one block is not suited to compensate for the variations in the channel transfer function of another block.

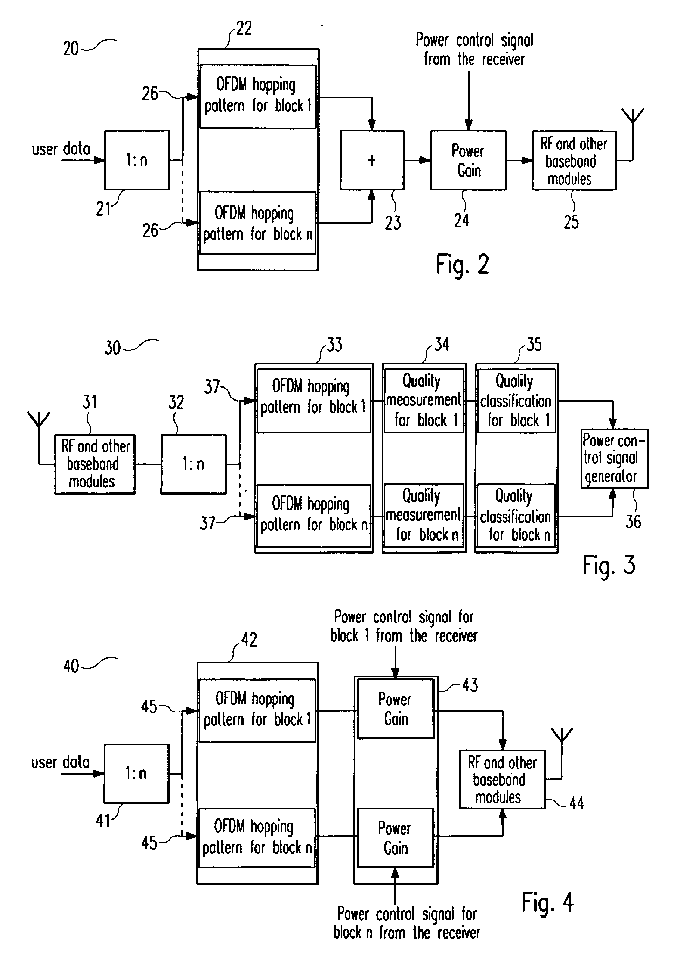

The block diagram of Fig. 2 shows the basic layout for the power control of the output in a transmitter structure according to a conventional power control scheme. The user data to be transmitted are distributed by a multiplexer 21 to a number of processing branches 26, whereby the number of the processing branches 26 used corresponds to the number of blocks assigned to the communication link. Within a processing branch 26 a subunit of hopping control 22 switches the frequency bands of the block assigned to that respective processing branch according to the hopping pattern defined within that communication link. The switching of the frequency band occurs independently for each block in the respective processing branch 26.

The outputs from the hopping control of the different processing branches are combined in the signal combiner 23 from which the resulting signals are then being passed on to the power amplifier 24. The gain in the amplifier is adjusted according to the content of the power control signal obtained from the receiver. This means that an identical power gain is applied to the different blocks of the communication link obviously disregarding the existing variations in the channel transfer function between the blocks.

The signal is being passed on to the transmission stage 25 after power amplification and further transmitted to the receiver. The transmission power will be above the necessary value. But, increasing the transmission power also extends the transmitter's reach. In a cellular wireless communication system, intercell-interference will be the consequence.

For a more effective power control, the transmission power has to be adjusted individually for each block. Fig. 3 shows the block diagram of a circuit layout in a receiver 30 for generating of a power control signal, which considers the variations in the signal quality of each individual block. The signals received from the transmitter are processed in the receiving front end 31 of the receiver structure. It is to be emphasised, that only elements important for the understanding of the present invention are mentioned. Further elements necessary for the operation of the system components but bearing no informational value for the understanding of the present invention, are omitted for the sake of clarity. A multiplexer 32 distributes the processed signals to a number of processing branches 37 whereby the number of processing branches used corresponds to the number of blocks assigned to the current communication link.

The circuit layout within one processing branch is identical for all the processing branches, therefore it is discussed only once on behalf of all. The subunit block hopping control 33 particular for the respective processing branch switches the frequency bands according to the hopping pattern set for the block assigned to this processing branch.

The measuring means 34 measures the quality of the signals modulated onto the subcarriers separately for each block and all processing branches. Particularly relevant quantities for evaluating the signal quality are for instance the signal-to-noise-ratio, the carrier-to-interference-ratio or the bit-error-rate But also other characteristic quantities can be used. Which quantity will actually be used depends on the situation and can be subject to change with the service used. E. g. for a data transmission service the signal may be optimised for a minimal bit-error-rate. A judgement of the received signal quality can further be based on a combination of values obtained from the measurement of different quantities important for a characterisation of the transmission path.

The result obtained from the measurement constitutes a quantitative quality statement which in itself can not be used directly in the power control loop. The values obtained from the measuring means 34 first have to be classified in the classifying means 35 so that a command for the transmitter can be derived to either raise, keep or lower the power level for a block assigned to a processing branch. Which command belongs to the actual value, is decided by comparing it with one or more values or maybe with a certain threshold value, whereby those must not necessarily be fixed values but maybe adjusted dynamically based on the service used for the actual transmission. E. g., if the measured value is above the actual threshold a down command will be sent to the transmitter to instruct it to reduce the transmitted power for that special block. Assumed the measured value is below the actual threshold value, then an up command will instruct the transmitter to increase the transmitted power for this block.

To avoid a constant change in the transmitted power level even when the channel transfer function for a block does not change significantly, a blurred threshold value might be used for the decision or, in other words, the decision to raise or reduce the transmitted power for that block will only be made when the measured value falls short or exceeds the threshold value by a certain amount. In a further advantageous embodiment of the present invention two values are defining a region so that, when the value falls within that region the transmitted power is to be kept constant, while when the measured value falls below that region the signal quality is judged to be insufficient and the transmitter is therefore instructed to increase the transmission power for that block, and when the measured value is situated above this region, then the transmitter will be instructed to reduce the transmission power for this block.

For every individual block the according processing branch yields a power control command for the receiver 30 which will be processed in the sending means 36 of the receiver and transmitted to the transmitter 40. The power control information can be sent in two or more parts, e. g. according to one embodiment of the present invention one individual control information will be sent for each individual block.

A circuit layout for a transmitter structure according to the present invention is shown in Fig. 4. User data prepared for transmission by means not shown in the figure are distributed to the various processing branches 45 by a multiplexer 41, whereby each of the processing branches is assigned to an individual block defined for the signal transmission of the corresponding communication link. The circuit scheme for each individual processing branch is identical to that of the others, therefore a description of one branch only is given on behalf of all. Block hopping control means 42 manages the switching of the frequency band individually for every block according to the hopping pattern defined for the block assigned to a certain processing branch and the period of a communication link. The amplifier 43 receives the power control signal selectively for the block of each processing branch, and adjusts its power gains according to the information enclosed in the signal. It is to be understood, that the power control signal is received by a receiving means of the transmitter not shown in the Fig. 4. A processing of the power control signal received from the receiver can be done by a special means of the transmitter not shown in this figure, so that only control information relevant for the subunit of the amplifier 43 in the respective processing branch 45 will be obtained and evaluated by this single subunit of the power amplifier 43 of this processing branch. But, according to a further embodiment of the present invention, a selection of the proper power control information can also be carried out by the power amplifier 43 itself. Finally, the total number of power adjusted block signals is processed in the RF front end 44 of the transceiver and sent to the receiver 30.

By implementing both, the receiver structure 30 and the transmitter structure 40 in mobile devices and base stations of a cellular wireless OFDM communication system, the power control scheme according to the present invention is used for the up-link and the down-link of the established communications.

## Claims

1. A method for controlling the transmitting power of a wireless OFDM communication link, whereby two or more blocks (11, 12) in the time-frequency grid (10) of the OFDM system are assigned to said communication link, comprising the steps of
- measuring the quality of signals received from a transmitter (40) by a receiver (30),
- classifying said signals quality,
- sending power control information from said receiver to said transmitter based on the result of the classification of the signal quality, and
- adjusting the transmitting power of said transmitter according to said power control information,
wherein said power control information sent to adjust the transmitting power of said transmitter contains separate information for each block assigned to said communication link, and **characterized in that** each block can hop across the time-frequency grid of the OFDM system, and **in that**
- the signals to be transmitted are distributed to separate processing branches by a multiplexing means (41), whereby each processing branch is assigned to one block of said communication link, and
- the OFDM hopping pattern is controlled by a separate processing branch provided by an OFDM hopping pattern control means (42) for each block assigned to said communication link.

2. A method according to claim 1,
**characterised in,**
**that** said signal processing branch comprises an individual subunit of said OFDM hopping pattern control means (42) for the block assigned to this processing branch and an individual subunit of said power gain control means (43) that adjusts the signal gain according to the power control information received for the block assigned to this processing branch from said receiver.

3. A transmitting device (40) for controlling the transmitting power of a wireless OFDM communication link established with a receiver (30), whereby two or more blocks (11, 12) in the time-frequency grid (10) of the OFDM system are assigned to said communication link and **characterized in that** each block can hop across the time-frequency grid of the OFDM system, said transmitting device comprising
- a multiplexing means (41) for distributing the signals to be transmitted to separate processing branches, whereby each processing branch (45) is assigned to one block of said communication link,
- an OFDM hopping pattern control means (42) providing a separate processing branch for each block assigned to said communication link,
- a power gain control means (43) adjusting the signal gain according to the power control information received from said receiver, and
- a transmitting means for transmitting said gain adjusted signals,
wherein
said power gain control means provides a separate processing branch (45) for each block (11, 12) assigned to said communication link.

4. A transmitting device for controlling the transmitting power of a wireless OFDM communication link established with a receiver according to claim 3
**characterised in,**
**that** said signal processing branch comprises an individual subunit of said OFDM hoping pattern control means (42) for the block assigned to this processing branch and an individual subunit of said power gain control means (43) for adjusting the signal gain according to the power control information received for the block assigned to this processing branch from said receiver.

5. A method for controlling the transmitting power of a wireless OFDM communication link according to claim 1
**characterised in,**
**that** the measurement of the signal-to-noise-ratio forms a basis for the measurement of the signal quality.

6. A method for controlling the transmitting power of a wireless OFDM communication link according to one of the claims 1 and 5
**characterised in,**
**that** the measurement of the carrier-to-interference-ratio forms a basis for the measurement of the signal quality.

7. A method for controlling the transmitting power of a wireless OFDM communication link according to one of the claims 1 and 5 to 6
**characterised in,**
**that** the measurement of the bit-error-rate forms a basis for the measurement of the signal quality.

8. A method for controlling the transmitting power of a wireless OFDM communication link according to one of the claims 1 and 5 to 7
**characterised in,**
**that** said blocks (11, 12) hop across the time-frequency grid (10) according to a pseudo-randomly scheme

9. A method for controlling the transmitting power of a wireless OFDM communication link according to claim 8
**characterised in,**
**that** the hopping pattern is repeated with a predefined fixed time period.

10. A method for controlling the transmitting power of a wireless OFDM communication link according to claim 9
**characterised in,**
**that** the hopping pattern is repeated with a period of one frame

11. A method for controlling the transmitting power of a wireless OFDM communication link according to claim 9
**characterised in,**
**that** the hopping pattern is repeated with a period of one superframe

12. A method for controlling the transmitting power of a wireless OFDM communication link according to one of the claims 1 and 5 to 11
**characterised in,**
**that** the power control is used for uplink connections from a mobile communication device to a base station.

13. A method for controlling the transmitting power of a wireless OFDM communication link according to one of the claims 1 and 5 to 12
**characterised in,**
**that** the power control is used for downlink connections from a base station to a mobile communication device.

## Patentansprüche

1. Verfahren zur Steuerung der Sendeleistung einer drahtlosen OFDM-Kommunikationsverbindung, wobei der Kommunikationsverbindung im Zeit-Frequenz-Gitter (10) des OFDM-Systems zwei oder mehr Blöcke (11, 12) zugeordnet werden, aufweisend die Schritte:
- Messen der Qualität von Signalen, die von einem Sender (40) durch einen Empfänger (30) empfangen werden,
- Klassifizieren der Signalqualität,
- Senden von Leistungssteuerungsinformation vom Empfänger zum Sender auf Basis des Resultats der Klassifikation der Signalqualität, und
- Einstellen der Sendeleistung des Senders entsprechend der Leistungssteuerungsinformation,
wobei die zum Einstellen der Sendeleistung des Senders gesendete Leistungssteuerungsinformation für jeden der Kommunikationsverbindung zugeordneten Block separate Information enthält und **dadurch gekennzeichnet ist, dass** jeder Block über das Zeit-Frequenz-Gitter des OFDM-Systems hüpfen kann und dass
- die zu sendenden Signale durch eine Multiplexeinrichtung (41) auf separate Verarbeitungszweige verteilt werden, wobei jeder Verarbeitungszweig einem einzelnen Block der Kommunikationsverbindung zugeordnet wird, und
- das OFDM-Hüpfmuster gesteuert wird durch einen separaten Verarbeitungszweig, der durch eine OFDM-Hüpfmuster-Steuerungseinrichtung (42) für jeden der Kommunikationsverbindung zugeordneten Block bereitgestellt wird.

2. Verfahren nach Anspruch 1,
**dadurch gekennzeichnet,**
**dass** der Signalverarbeitungszweig für den diesem Verarbeitungszweig zugeordneten Block eine individuelle Subeinheit der OFDM-Hüpfinuster-Steuerungseinrichtung (42) und eine individuelle Subeinheit der Leistungsverstärkungs-Steuerungseinrichtung (43), welche die Signalverstärkung entsprechend der vom Empfänger für den diesem Verarbeitungszweig zugeordneten Block empfangenen Leistungssteuerungsinformation einstellt, aufweist.

3. Sendevorrichtung (40) zur Steuerung der Sendeleistung einer mit einem Empfänger (30) errichteten drahtlosen OFDM-Kommunikationsverbindung, wobei der Kommunikationsverbindung im Zeit-Frequenz-Gitter (10) des OFDM-Systems zwei oder mehr Blöcke (11, 12) zugeordnet sind und jeder Block über das Zeit-Frequenz-Gitter des OFDM-Systems hüpfen kann, **dadurch gekennzeichnet, dass** die Sendevorrichtung aufweist:
- eine Multiplexeinrichtung (41) zur Verteilung der zu sendenden Signale auf separate Verarbeitungszweige, wobei jeder Verarbeitungszweig (45) einem einzelnen Block der Kommunikationsverbindung zugeordnet ist,
- eine OFDM-Hüpfmuster-Steuerungseinrichtung (42), die für jeden der Kommunikationsverbindung zugeordneten Block einen separaten Verarbeitungszweig bereitstellt,
- eine Leistungsverstärkungs-Steuerungseinrichtung (43), welche die Signalverstärkung entsprechend der vom Empfänger empfangenen Leistungssteuerungsinformation einstellt, und
eine Sendeeinrichtung zum Senden der Verstärkungs-eingestellten Signale,
wobei
die Leistungsverstärkungs-Steuerungseinrichtung für jeden der Kommunikationsverbindung zugeordneten Block (11, 12) einen separaten Verarbeitungszweig (45) bereitstellt.

4. Sendevorrichtung zur Steuerung der Sendeleistung einer mit einem Empfänger errichteten drahtlosen OFDM-Kommunikationsverbindung nach Anspruch 3,
**dadurch gekennzeichnet,**
**dass** der Signalverarbeitungszweig für den diesem Verarbeitungszweig zugeordneten Block eine individuelle Subeinheit der OFDM-Hüpfmuster-Steuerungseinrichtung (42) und eine individuelle Subeinheit der Leistungsverstärkungs-Steuerungseinrichtung (43) zur Einstellung der Signalverstärkung entsprechend der vom Empfänger für den diesem Verarbeitungszweig zugeordneten Block empfangenen Leistungssteuerungsinformation aufweist.

5. Verfahren zur Steuerung der Sendeleistung einer drahtlosen OFDM-Kommunikationsverbindung nach Anspruch 1,
**dadurch gekennzeichnet,**
**dass** die Messung des Signal-zu-Rauschen-Verhältnisses eine Basis für die Messung der Signalqualität bildet.

6. Verfahren zur Steuerung der Sendeleistung einer drahtlosen OFDM-Kommunikationsverbindung nach einem der Ansprüche 1 und 5
**dadurch gekennzeichnet,**
**dass** die Messung des Träger-zu-Interferenz-Verhältnisses eine Basis für die Messung der Signalqualität bildet.

7. Verfahren zur Steuerung der Sendeleistung einer drahtlosen OFDM - Kommunikationsverbindung nach einem der Ansprüche 1 und 5 bis 6,
**dadurch gekennzeichnet,**
**dass** die Messung der Bitfehlerrate eine Basis für die Messung der Signalqualität bildet.

8. Verfahren zur Steuerung der Sendeleistung einer drahtlosen OFDM-Kommunikationsverbindung nach einem der Ansprüche 1 und 5 bis 7,
**dadurch gekennzeichnet,**
**dass** die Blöcke (11, 12) entsprechend einem pseudo-zufälligen Schema über das Zeit-Frequenz-Gitter (10) hüpfen.

9. Verfahren zur Steuerung der Sendeleistung einer drahtlosen OFDM-Kommunikationsverbindung nach Anspruch 8,
**dadurch gekennzeichnet,**
**dass** das Hüpfmuster mit einer vordefinierten festen Zeitperiode wiederholt wird.

10. Verfahren zur Steuerung der Sendeleistung einer drahtlosen OFDM-Kommunikationsverbindung nach Anspruch 9,
**dadurch gekennzeichnet,**
**dass** das Hüpfmuster mit einer Periode eines einzelnen Rahmens wiederholt wird.

11. Verfahren zur Steuerung der Sendeleistung einer drahtlosen OFDM-Kommunikationsverbindung nach Anspruch 9,
**dadurch gekennzeichnet,**
**dass** das Hüpfmuster mit einer Periode eines einzelnen Subrahmens wiederholt wird.

12. Verfahren zur Steuerung der Sendeleistung einer drahtlosen OFDM-Kommunikationsverbindung nach einem der Ansprüche 1 und 5 bis 11,
**dadurch gekennzeichnet,**
**dass** die Leistungssteuerung zur Anbindung von Verbindungen von einem mobilen Kommunikationsgerät nach oben an eine Basisstation benutzt wird.

13. Verfahren zur Steuerung der Sendeleistung einer drahtlosen OFDM-Kommunikationsverbindung nach einem der Ansprüche 1 und 5 bis 12,
**dadurch gekennzeichnet,**
**dass** die Leistungssteuerung zur Anbindung von Verbindungen von einer Basisstation nach unten an ein mobiles Kommunikationsgerät benutzt wird.

## Revendications

1. Procédé de commande de la puissance d'émission d'une liaison de communication OFDM sans fil, tel qu'un ou plusieurs blocs (11, 12) de la grille temps-fréquence (10) du système OFDM sont assignés à ladite liaison de communication, comprenant les étapes consistant à
- mesurer la qualité des signaux reçus par un récepteur (30) depuis un émetteur (40),
- classer lesdites qualités de signaux,
- envoyer des informations de commande de puissance dudit récepteur vers ledit émetteur, basées sur le résultat de la classification de la qualité des signaux, et
- régler la puissance d'émission dudit émetteur en fonction desdites informations de commande de puissance,
dans lequel lesdites informations de commande de puissance envoyées pour régler la puissance d'émission dudit émetteur contiennent des informations séparées pour chaque bloc assigné à ladite liaison de communication, et **caractérisé en ce que**
- chaque bloc peut effectuer un bond sur la grille temps-fréquence du système OFDM,
et **en ce que**
- les signaux à émettre sont répartis vers des branches de traitement séparées par un moyen de multiplexage (41) de façon que chaque branche de traitement soit assignée à un bloc de ladite liaison de communication, et
le motif de bonds d'OFDM est commandé par une branche de traitement séparée fournie par un moyen de commande de motif de bonds d'OFDM (42) pour chaque bloc assigné à ladite liaison de communication.

2. Procédé selon la revendication 1,
**caractérisé en ce que**
ladite branche de traitement de signal comprend une unité secondaire individuelle dudit moyen de commande de motif de bonds d'OFDM (42) pour le bloc assigné à cette branche de traitement et une unité secondaire individuelle dudit moyen de commande de gain en puissance (43) qui règle le gain du signal en fonction des informations de commande de puissance reçues par ledit récepteur pour le bloc assigné à cette branche de traitement.

3. Dispositif d'émission (40) pour commander la puissance d'émission d'une liaison de communication OFDM sans fil établie avec un récepteur (30), tel qu'un ou plusieurs blocs (11, 12) de la grille temps-fréquence (10) du système OFDM sont assignés à ladite liaison de communication et **caractérisé en ce que** chaque bloc peut effectuer un bond sur la grille temps-fréquence du système OFDM, ledit dispositif d'émission comprenant
- un moyen de multiplexage (41) pour répartir les signaux à émettre vers des branches de traitement séparées, de façon que chaque branche de traitement (45) soit assignée à un bloc de ladite liaison de communication,
- un moyen de commande de motif de bonds d'OFDM (42) fournissant une branche de traitement séparée pour chaque bloc assigné à ladite liaison de communication,
- un moyen de commande de gain en puissance (43) réglant le gain du signal en fonction des informations de commande de puissance reçues par ledit récepteur, et
- un moyen d'émission pour émettre lesdits signaux dont le gain a été réglé,
dans lequel
ledit moyen de commande de gain en puissance fournit une branche de traitement séparée (45) pour chaque bloc (11, 12) assigné à ladite liaison de communication.

4. Dispositif d'émission pour commander la puissance d'émission d'une liaison de communication OFDM sans fil établie avec un récepteur selon la revendication 3
**caractérisé en ce que**
ladite branche de traitement de signal comprend une unité secondaire individuelle dudit moyen de commande de motif de bonds d'OFDM (42) pour le bloc assigné à cette branche de traitement et une unité secondaire individuelle dudit moyen de commande de gain en puissance (43) pour régler le gain du signal en fonction des informations de commande de puissance reçues par ledit récepteur pour le bloc assigné à cette branche de traitement.

5. Procédé de commande de la puissance d'émission d'une liaison de communication OFDM sans fil selon la revendication 1
**caractérisé en ce que**
la mesure du rapport signal sur bruit constitue la base de la mesure de la qualité du signal.

6. Procédé de commande de la puissance d'émission d'une liaison de communication OFDM sans fil selon l'une des revendications 1 et 5
**caractérisé en ce que**
la mesure du rapport porteuse sur interférence constitue la base de la mesure de la qualité du signal.

7. Procédé de commande de la puissance d'émission d'une liaison de communication OFDM sans fil selon l'une des revendications 1 et 5à6
**caractérisé en ce que**
la mesure du taux d'erreur sur les bits constitue la base de la mesure de la qualité du signal.

8. Procédé de commande de la puissance d'émission d'une liaison de communication OFDM sans fil selon l'une des revendications 1 et 5à7
**caractérisé en ce que**
lesdits blocs (11, 12) effectuent un bond sur la grille temps-fréquence (10) selon un aménagement pseudo-aléatoire.

9. Procédé de commande de la puissance d'émission d'une liaison de communication OFDM sans fil selon la revendication 8
**caractérisé en ce que**
le motif de bonds est répété avec une période de temps fixe prédéterminée.

10. Procédé de commande de la puissance d'émission d'une liaison de communication OFDM sans fil selon la revendication 9
**caractérisé en ce que**
le motif de bonds est répété avec une période d'une trame.

11. Procédé de commande de la puissance d'émission d'une liaison de communication OFDM sans fil selon la revendication 9
**caractérisé en ce que**
le motif de bonds est répété avec une période d'une super trame.

12. Procédé de commande de la puissance d'émission d'une liaison de communication OFDM sans fil selon l'une des revendications 1 et 5 à 11
**caractérisé en ce que**
la commande de puissance est utilisée pour les connexions de liaison montante d'un dispositif de communication mobile vers une station de base.

13. Procédé de commande de la puissance d'émission d'une liaison de communication OFDM sans fil selon l'une des revendications 1 et 5 à 12
**caractérisé en ce que**
la commande de puissance est utilisée pour des connexions de liaison descendante d'une station de base vers un dispositif de communication mobile.
